# EUROPEAN PATENT APPLICATION

(11) **EP 4 738 162 A1**
(43) Date of publication of application: **06.05.2026**
(21) Application number: 25212802.0
(22) Date of filing: 31.10.2025
(51) Int. Cl.: G06F 21/55, G06F 21/56, G06F 21/57

(54) **MINIFILTER SQUATTING PROTECTION**

(30) Priority: 01.11.2024 US 202463715149 P
(71) Applicant: Sophos Limited, Abingdon, Oxfordshire OX14 3YP (GB)
(72) Inventor: BECKHERRN, Dietmar Georg, Abingdon OX14 3YP (GB); KENNING, Emile Marcus, Abingdon OX14 3YP (GB)
(74) Representative: Black, Diego

(57) **Abstract**

A method for protecting against minifilter squatting attacks includes installing an endpoint detection and response system on an endpoint device, wherein the endpoint detection and response system includes at least one filesystem minifilter driver, and appending the at least one filesystem minifilter driver with a randomly generated fractional to an assigned integer altitude at a time of loading the at least one filesystem minifilter driver and/or inserting a combination of randomly generated characters into a minifilter instance name at the time of loading the at least one filesystem minifilter driver.

## Description

### CROSS-REFERENCE TO RELATED APPLICATION

This application claims priority from U.S. Provisional Patent Application Serial No. 63/715,149 filed on November 1, 2024 entitled "MINIFILTER SQUATTING PROTECTION" the entire contents of which are hereby incorporated by reference.

### FIELD

The present disclosure relates generally to endpoint protection and cyber security. More particularly, the present disclosure relates to protecting against minifilter squatting attacks, and in particular altitude and name minifilter squatting.

### BACKGROUND

Microsoft Windows ^{®} utilizes a Filter Manager system for managing filter drivers. In particular, the Filter Manager (FltMgr.sys) is a system-supplied kernel-mode driver that implements and exposes functionality commonly required in file system filter drivers. File system filter developers can use FltMgr's functionality to write filesystem minifilter drivers (i.e. minifilters). FltMgr is a core component of Windows and becomes active from the time of system start.

A minifilter attaches to the file system stack indirectly, by registering with FltMgr for the I/O operations that the minifilter chooses to filter. Minifilters attach in a particular order. The operating system determines the order of attachment by load order groups and altitudes. The attachment of a minifilter at a particular altitude on a particular volume is called an instance of the minifilter. In particular, a minifilter's altitude ensures that the instance of the minifilter driver is always loaded at the appropriate location relative to other minifilter instances, and further determines the order in which FltMgr calls the minifilter to handle I/O.

Using filesystem minifilters, endpoint security products can learn about the files being created, modified, written to, and deleted. For example, minifilters can observe an attacker's interactions with the filesystem. As a result of their usefulness in endpoint security products, attackers may attempt to evade minifilters.

As such, systems and methods for preventing minifilter evasion or attacks would be well received in the art.

### BRIEF DESCRIPTION OF THE DRAWINGS

The above and further advantages of this disclosure may be better understood by referring to the following description in conjunction with the accompanying drawings, in which like reference numerals indicate like elements and features in the various figures. For clarity, not every element may be labeled in every figure. The drawings are not necessarily to scale, emphasis instead being placed upon illustrating the principles of the disclosure.
FIG. 1 depicts a block diagram of an environment for threat management, according to an example embodiment.
FIG. 2 depicts an architectural schematic view of a legacy filter driver architecture.
FIG. 3 depicts an architectural schematic view of a filter manager and minifilter architecture according to one embodiment.
FIG. 4 depicts an architectural schematic view of an endpoint detection and response (EDR) system including a central threat management system monitoring a plurality of endpoint devices according to one embodiment.
FIG. 5 depicts a flow chart for a method for protecting against filesystem minifilter driver altitude squatting attacks according to one embodiment.
FIG. 6 depicts a flow chart for another method protecting against filesystem minifilter driver name squatting attacks according to one embodiment.
FIG. 7 depicts a flow chart for a method for protecting against filesystem minifilter driver name and altitude squatting attacks according to one embodiment.
FIG. 8 depicts a flow chart for a method for protecting against filesystem minifilter driver squatting attacks with multiple monitored endpoint devices according to one embodiment.
FIG. 9 depicts a diagram of an example computing device, according to an example embodiment.

### SUMMARY

According to various embodiments disclosed herein, a method for protecting against filesystem minifilter driver squatting attacks includes installing at least one filesystem minifilter driver on an endpoint device; and appending the at least one filesystem minifilter driver with a randomly generated fractional to an assigned integer altitude at a time of loading the at least one filesystem minifilter driver.

According to other embodiments, a computer system, includes a threat management computer system including a centralized endpoint detection and response (EDR) system configured to monitor a plurality of endpoints for threats; and an endpoint device monitored by the centralized threat management computer system, the an endpoint device including a localized EDR system in communication with the centralized EDR system, the an endpoint device including a filter manager. The localized EDR system includes at least one filesystem minifilter driver managed by the filter manager, and the at least one filesystem minifilter driver includes an appended randomly generated fractional to an assigned integer altitude.

According to other embodiments, a method for protecting against filesystem minifilter driver squatting attacks includes installing an endpoint detection and response system on an endpoint device, wherein the endpoint detection and response system includes at least one filesystem minifilter driver. The method includes generating a random fractional using an operating system function at the start of loading the at least one filesystem minifilter driver and appending the at least one filesystem minifilter driver with the randomly generated fractional to an assigned integer altitude at a time of loading the at least one filesystem minifilter driver. The method includes registering the at least one filesystem minifilter driver with a filter manager of the endpoint device with the assigned integer altitude appended by the randomly generated fractional. The method further includes intercepting a request, by the filter manager, destined for the filesystem, passing, by the filter manager, the intercepted request to the loaded filesystem minifilter driver, and detecting, by the at least one minifilter driver, at least one of a creation of a new file, a modification of an existing file, and a usage of a named pipe.

According to other embodiments, a method for protecting against minifilter squatting attacks includes installing an endpoint detection and response system on an endpoint, wherein the endpoint detection and response system includes at least one filesystem minifilter driver; and inserting a combination of randomly generated characters into a minifilter instance name of the at least one filesystem minifilter driver at a time of loading the at least one filesystem minifilter driver.

According to other embodiments, a computer system, includes a threat management computer system including a centralized endpoint detection and response (EDR) system configured to monitor a plurality of endpoints for threats; and an endpoint device monitored by the centralized threat management computer system, the an endpoint device including a localized EDR system in communication with the centralized EDR system, the an endpoint device including a filter manager. The localized EDR system includes at least one filesystem minifilter driver managed by the filter manager, and the at least one filesystem minifilter driver including a combination of randomly generated characters inserted into a filesystem minifilter driver instance name.

According to other embodiments, a method for protecting against filesystem minifilter driver squatting attacks includes installing an endpoint detection and response system on an endpoint device, wherein the endpoint detection and response system includes at least one filesystem minifilter driver. The method includes generating a combination of random characters using an operating system function at the start of loading the at least one filesystem minifilter driver and inserting a combination of randomly generated characters into a minifilter instance name of the at least one filesystem minifilter driver at a time of loading the at least one filesystem minifilter driver. The method includes registering the at least one filesystem minifilter driver with a filter manager of the endpoint device with minifilter instance name appended by the combination of randomly. The method further includes intercepting a request, by the filter manager, destined for the filesystem, passing, by the filter manager, the intercepted request to the loaded filesystem minifilter driver, and detecting, by the at least one minifilter driver, at least one of a creation of a new file, a modification of an existing file, and a usage of a named pipe.

### DETAILED DESCRIPTION

Reference in the specification to "one embodiment" or "an embodiment" means that a particular, feature, structure or characteristic described in connection with the embodiment is included in at least one embodiment of the teaching. References to a particular embodiment within the specification do not necessarily all refer to the same embodiment.

The present teaching will now be described in more detail with reference to exemplary embodiments thereof as shown in the accompanying drawings. While the present teaching is described in conjunction with various embodiments and examples, it is not intended that the present teaching be limited to such embodiments. On the contrary, the present teaching encompasses various alternatives, modifications and equivalents, as will be appreciated by those of skill in the art. Those of ordinary skill having access to the teaching herein will recognize additional implementations, modifications and embodiments, as well as other fields of use, which are within the scope of the present disclosure as described herein.

Recitation of ranges of values herein are not intended to be limiting, referring instead individually to any and all values falling within the range, unless otherwise indicated herein, and each separate value within such a range is incorporated into the specification as if it were individually recited herein. The words "about," "approximately" or the like, when accompanying a numerical value, are to be construed as indicating a deviation as would be appreciated by one of ordinary skill in the art to operate satisfactorily for an intended purpose. Similarly, words of approximation such as "approximately" or "substantially" when used in reference to physical characteristics, should be understood to contemplate a range of deviations that would be appreciated by one of ordinary skill in the art to operate satisfactorily for a corresponding use, function, purpose, or the like. Ranges of values and/or numeric values are provided herein as examples only, and do not constitute a limitation on the scope of the described embodiments. Where ranges of values are provided, they are also intended to include each value within the range as if set forth individually, unless expressly stated to the contrary. The use of any and all examples, or exemplary language ("e.g.," "such as," or the like) provided herein, is intended merely to better illuminate the embodiments and does not pose a limitation on the scope of the embodiments. No language in the specification should be construed as indicating any unclaimed element as essential to the practice of the embodiments.

In the following description, it is understood that terms such as "first," "second," "top," "bottom," "up," "down," and the like, are words of convenience and are not to be construed as limiting terms.

It should also be understood that endpoints, devices, compute instances or the like that are referred to as "within" an enterprise network may also be "associated with" the enterprise network, e.g., where such assets are outside an enterprise gateway but nonetheless managed by or in communication with a threat management facility or other centralized security platform for the enterprise network. Thus, any description referring to an asset within the enterprise network should be understood to contemplate a similar asset associated with the enterprise network regardless of location in a network environment unless a different meaning is explicitly provided or otherwise clear from the context.

Embodiments herein are directed to methods and computer systems configured to protect against minifilter squatting attacks.

Specifically, the present disclosure endeavors to prevent squatting attacks which can be used to evade filesystem minifilter drivers (i.e. minifilters) which are used by an endpoint detection and response (EDR) systems. In particular, the present disclosure recognizes that squatting attacks may prevent an EDR minifilter from functioning if, for example, another minifilter is weaponized to share the same instance name as an EDR minifilter and is configured to load before an EDR minifilter. Additionally, the present disclosure recognizes that squatting attacks may prevent an EDR minifilter from functioning if, for example, another minifilter is weaponized to shares the same exact altitude as an EDR minifilter and is configured to load before an EDR minifilter. The present disclosure contemplates hardening EDR minifilters against this form of attack through dynamically changing instance names and/or altitude fractionals at the start of the system.

Thus, applications of the present disclosure improve the functionality of endpoint detection and response (EDR) systems by preventing minifilter evasion through squatting attacks. Embodiments contemplated herein ensure that endpoint protection cannot be neutered or rendered ineffective in the event of weaponized minifilter instance name and/or altitude squatting attacks.

Advantageously, embodiments contemplated herein do not result in any minifilter or EDR performance degradation. Implementation of the concepts provided herein may be integrated into the current filter manager systems in common operating systems, such as the Filter Manager system found in Microsoft Windows ^{®}.

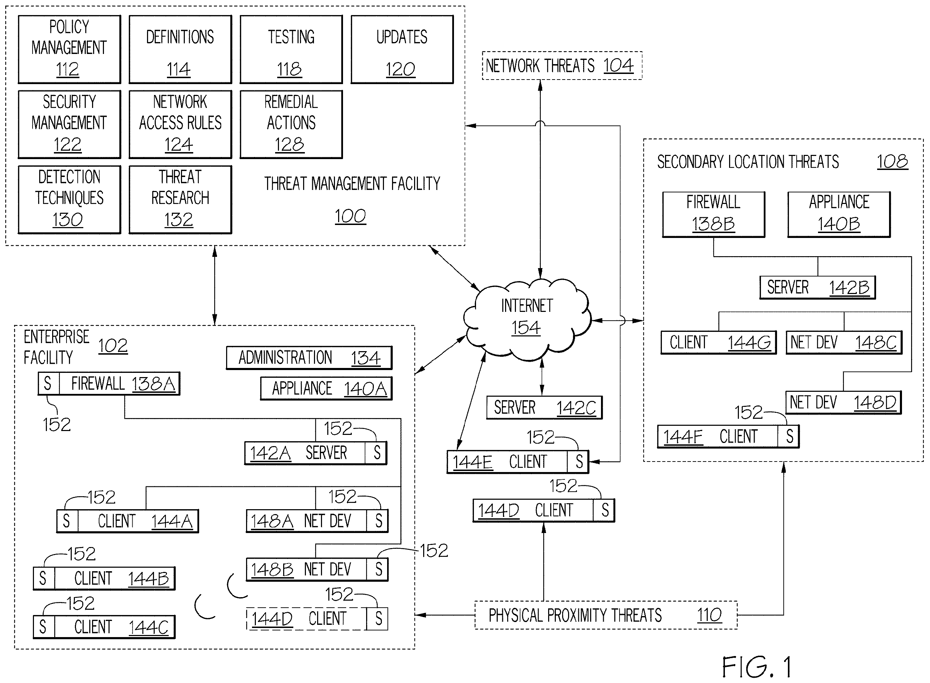

FIG. 1 illustrates an environment for threat management, according to an example embodiment. Specifically, FIG. 1 depicts a block diagram of a threat management facility 100 providing protection to one or more enterprises, networks, locations, users, businesses, etc. against a variety of threats-a context in which the techniques described herein may usefully be deployed. The threat management facility 100 may represent any threat management system.

The threat management facility 100 may be used to protect devices and assets (e.g., IoT devices or other devices) from computer-generated and human-generated threats. For example, a corporation, school, web site, homeowner, network administrator, or other entity may institute and enforce one or more policies that control or prevents certain network users (e.g., employees, residents, users, guests, etc.) from accessing certain types of applications, devices, resources generally or in a particular manner. Policies may be created, deployed and managed, for example, through the threat management facility 100, which may update and monitor network devices, users, and assets accordingly.

The threat of enumeration attacks, malware or other compromises may be present at various points within a network 102 such as laptops, desktops, servers, gateways, communication ports, handheld or mobile devices, IoT devices, firewalls. In addition to controlling or stopping malicious code, a threat management facility 100 may provide policy management to control devices, applications, or users that might otherwise undermine productivity and network performance within the network 102.

The threat management facility 100 may provide protection to network 102 from computer-based malware, including viruses, spyware, adware, Trojans, intrusion, spam, policy abuse, advanced persistent threats, uncontrolled access, and the like. In general, the network 102 may be any networked computer-based infrastructure or the like managed by a threat management facility 100, such as an organization, association, institution, or the like, or a cloud-based facility that is available for subscription by individuals. For example, the network 102 may be a corporate, commercial, educational, governmental, or other network 102, and may include multiple networks, computing resources, and other facilities, may be distributed among more than one geographical location, and may include administration 134, a firewall 138A, an appliance 140A, a server 142A, network devices 148A-B, clients 144A-D, such as IoT devices or other devices. It will be understood that any reference herein to a client or client facilities may include the clients 144A-D shown in FIG. 1 and vice versa.

The threat management facility 100 may include computers, software, or other computing facilities supporting a plurality of functions, such as security management facility 122, policy management facility 112, update facility 120, a definitions facility 114, network access rules facility 124, remedial action facility 128, detection techniques facility 130, testing facility 118, a threat research facility 132, and the like. In embodiments, the threat protection provided by the threat management facility 100 may extend beyond the network boundaries of the network 102 to include clients 144D (or client facilities) that have moved into network connectivity not directly associated with or controlled by the network 102. Threats to client facilities may come from a variety of sources, such as from network threats 104, physical proximity threats 110, secondary location threats 108, and the like. Clients 144A-D may be protected from threats even when the client 144A-D is not directly connected or in association with the network 102, such as when a client 144E-F moves in and out of the network 102, for example when interfacing with an unprotected server 142C through the Internet 154, when a client 144F is moving into a secondary location threat 108 network such as interfacing with components 140B, 142B, 148C, 148D that are not protected, and the like.

The threat management facility 100 may use or may be included in an integrated system approach to provide network 102 protection from a plurality of threats to device resources in a plurality of locations and network configurations. The threat management facility 100 may also or instead be deployed as a stand-alone solution. For example, some or all of the threat management facility 100 components may be integrated into a server or servers at a remote location, for example in a cloud computing facility. For example, some or all of the threat management facility 100 components may be integrated into a firewall, gateway, or access point within or at the border of the network 102. In some embodiments, the threat management facility 100 may be integrated into a product, such as a third-party product, e.g., through an application programming interface, which may be deployed on endpoints, on remote servers, on internal servers or gateways for a network, or some combination of these.

The security management facility 122 may include a plurality of elements that provide protection from malware to network 102 device resources in a variety of ways including endpoint security and control, email security and control, web security and control, reputation-based filtering, control of unauthorized users, control of guest and non-compliant computers, and the like. The security management facility 122 may include a local software application that provides protection to one or more network 10 devices. The security management facility 122 may have the ability to scan client facility files for malicious code, remove or quarantine certain applications and files, prevent certain actions, perform remedial actions and perform other security measures. This may include scanning some or all of the files stored on the client facility or accessed by the client facility on a periodic basis, scanning an application when the application is executed, scanning data (e.g., files or other communication) in transit to or from a device, etc. The scanning of applications and files may be performed to detect known or unknown malicious code or unwanted applications.

The security management facility 122 may provide email security and control. The security management facility 122 may also or instead provide for web security and control, such as by helping to detect or block viruses, spyware, malware, unwanted applications, and the like, or by helping to control web browsing activity originating from client devices. In an embodiment, the security management facility 122 may provide for network access control, which may provide control over network connections. In addition, network access control may control access to virtual private networks (VPN) that provide communications networks tunneled through other networks. The security management facility 122 may provide host intrusion prevention through behavioral based protection, which may guard against known or unknown threats by analyzing behavior before or while code executes. The security management facility 122 may provide reputation filtering, which may target or identify sources of code.

In general, the security management facility 122 may support overall security of the network 102 using the various techniques described above, optionally as supplemented by updates of malicious code information and so forth for distribution across the network 102.

The administration facility 134 may provide control over the security management facility 122 when updates are performed. Information from the security management facility 122 may also be sent from the enterprise back to a third party, a vendor, or the like, which may lead to improved performance of the threat management facility 100.

The threat management facility 100 may include a policy management facility 112 configured to take actions, such as to block applications, users, communications, devices, and so on based on determinations made. The policy management facility 112 may employ a set of rules or policies that determine network 102 access permissions for a client 144. In an embodiment, a policy database may include a block list, a blacklist, an allowed list, a whitelist, or the like, or combinations of the foregoing, that may provide a list of resources internal or external to the network 102 that may or may not be accessed by client devices 144. The policy management facility 112 may also or instead include rule-based filtering of access requests or resource requests, or other suitable techniques for controlling access to resources consistent with a corresponding policy.

The policy management facility 112 may also provide configuration policies to be used to compare and control the configuration of applications, operating systems, hardware, devices, network associated with the network 102. An evolving threat environment may dictate timely updates, and thus an update management facility 120 may also be provided by the threat management facility 100. In addition, a policy management facility 112 may require update management (e.g., as provided by the update facility 120 herein described). In embodiments, the update management facility 120 may provide for patch management or other software updating, version control, and so forth.

The security facility 122 and policy management facility 112 may push information to the network 102 and/or a given client 144. The network 102 and/or client 144 may also or instead request information from the security facility 122 and/or policy management facility 112, network server facilities 142, or there may be a combination of pushing and pulling of information. In an embodiment, the policy management facility 112 and the security facility 122 management update modules may work in concert to provide information to the network 102 and/or client 144 facility for control of applications, devices, users, and so on.

As threats are identified and characterized, the threat management facility 100 may create updates that may be used to allow the threat management facility 100 to detect and remediate malicious software, unwanted applications, configuration and policy changes, and the like. The threat definition facility 114 may contain threat identification updates, also referred to as definition files. A definition file may be a virus identity file that may include definitions of known or potential malicious code. The virus identity definition files may provide information that may identify malicious code within files, applications, or the like. The definition files may be accessed by security management facility 122 when scanning files or applications within the client facility for the determination of malicious code that may be within the file or application. A definition management facility may include a definition for a neural network or other recognition engine. A definition management facility 114 may provide timely updates of definition files information to the network, client facilities, and the like.

The security management facility 122 may be used to scan an outgoing file and verify that the outgoing file is permitted to be transmitted per the enterprise facility 102 rules and policies. By checking outgoing files, the security management facility 122 may be able to discover malicious code infected files that were not detected as incoming files.

The threat management facility 100 may provide controlled access to the network 102. A network access rules facility 124 may be responsible for determining if a client facility 144 application should be granted access to a requested network resource. In an embodiment, the network access rules facility 124 may verify access rights for client facilities 144 to or from the network 102 or may verify access rights of computer facilities to or from external networks. When network access for a client facility is denied, the network access rules facility 124 may send an information file to the client facility, e.g., a command or command file that the remedial action facility 128 may access and take action upon. The network access rules facility 124 may include one or more databases that may include a block list, a blacklist, an allowed list, a white list, a reputation list, an unacceptable network resource database, an acceptable network resource database, a network resource reputation database, or the like. The network access rules facility 124 may incorporate rule evaluation. Rule evaluation may, for example, parse network access requests and apply the parsed information to network access rules. The network access rule facility 124 may also or instead provide updated rules and policies to the enterprise facility 102.

When a threat or policy violation is detected by the threat management facility 100, the threat management facility 100 may perform or initiate remedial action through a remedial action facility 128. Remedial action may take a variety of forms, such as terminating or modifying an ongoing process or interaction, issuing an alert, sending a warning to a client or administration facility 134 of an ongoing process or interaction, executing a program or application to remediate against a threat or violation, record interactions for subsequent evaluation, and so forth. The remedial action may include one or more of blocking some or all requests to a network location or resource, performing a malicious code scan on a device or application, performing a malicious code scan on the client facility 144, quarantining a related application (or files, processes or the like), terminating the application or device, isolating the application or device, moving a process or application code to a sandbox for evaluation, isolating the client facility 144 to a location or status within the network that restricts network access, blocking a network access port from a client facility 144, reporting the application to an administration facility 134, or the like, as well as any combination of the foregoing.

Remedial action may be provided as a result of a detection of a threat or violation. The detection techniques facility 130 may include tools for monitoring the network or managed devices within the network 102. The detection techniques facility 130 may provide functions such as monitoring activity and stored files on computing facilities. Detection techniques, such as scanning a computer's stored files, may provide the capability of checking files for stored threats, either in the active or passive state. Detection techniques such as streaming file management may be used to check files received at the network, a gateway facility, a client facility, and the like.

Verifying that the threat management facility 100 detects threats and violations to established policy, may require the ability to test the system, either at the system level or for a particular computing component. The testing facility 118 may allow the administration facility 134 to coordinate the testing of the security configurations of client facility computing facilities on a network. For example, the administration facility 134 may be able to send test files to a set of client facility computing facilities to test the ability of the client facility to determine acceptability of the test file. After the test file has been transmitted, a recording facility may record the actions taken by the client facility in reaction to the test file. The recording facility may aggregate the testing information from the client facility and report the testing information to the administration facility 134. The administration facility 134 may be able to determine the level of preparedness of the client facility 144 based on the reported information. Remedial action may be taken for any of the client facilities 144 as determined by the administration facility 134.

The threat management facility 100 may provide threat protection across the network 102 to devices such as clients 144, a server facility 142, an administration facility 134, a firewall 138, a gateway, one or more network devices (e.g., hubs and routers 148, a threat management or other appliance 140, any number of desktop or mobile users, and the like. As used herein the term endpoint may refer to any compute instance running on a device that can source data, receive data, evaluate data, buffer data, process data or the like (such as a user's desktop computer, laptop, IoT device, server, etc.). This may, for example, include any client devices as well as other network devices and the like within the network 102, such as a firewall or gateway (as a data evaluation endpoint computer system), a laptop (as a mobile endpoint computer), a tablet (as a hand-held endpoint computer), a mobile phone, or the like. The term endpoint may also or instead refer to any final or intermediate source or destination for data within a network 102. The endpoint computer security facility 152 may be an application locally loaded onto any corresponding computer platform or computer support component, either for local security functions or for management by the threat management facility 100 or other remote resource, or any combination of these.

The network 102 may include a plurality of client facility computing platforms on which the endpoint computer security facility 152 is installed. A client facility computing platform may be a computer system that is able to access a service on another computer, such as a server facility 142, via a network. The endpoint computer security facility 152 may, in corresponding fashion, provide security in any suitable context such as among a plurality of networked applications, for a client facility connecting to an application server facility 142, for a web browser client facility connecting to a web server facility 142, for an e-mail client facility retrieving e-mail from an Internet 154 service provider's mail storage servers 142 or web site, and the like, as well as any variations or combinations of the foregoing.

The network 102 may include one or more of a variety of server facilities 142, such as application servers, communications servers, file servers, database servers, proxy servers, mail servers, fax servers, game servers, web servers, and the like. A server facility 142, which may also be referred to as a server facility 142 application, server facility 142 operating system, server facility 142 computer, or the like, may be any device(s), application program(s), operating system(s), or combination of the foregoing that accepts client facility connections in order to service requests from clients 144. In embodiments, the threat management facility 100 may provide threat protection to server facilities 142 within the network 102 as load conditions and application changes are made.

A server facility 142 may include an appliance facility 140, where the appliance facility 140 provides specific services to other devices on the network. Simple server facility 142 appliances may also be utilized across the network 102 infrastructure, such as switches, routers, hubs, gateways, print servers, modems, and the like. These appliances may provide interconnection services within the network 102, and therefore may advance the spread of a threat if not properly protected.

A client facility 144 may be protected from threats from within the network 102 using a local or personal firewall, which may be a hardware firewall, software firewall, or combination, that controls network traffic to and from a client. The local firewall may permit or deny communications based on a security policy. Another component that may be protected by an endpoint computer security facility 152 is a network firewall facility 138, which may include hardware or software, in a standalone device or integrated with another network component, that may be configured to permit, deny, or proxy data through a network 102.

The interface between the threat management facility 100 and the network 102, and through the appliance facility 140 to embedded endpoint computer security facilities, may include a set of tools that may be the same or different for various implementations, and may allow each network administrator to implement custom controls. In embodiments, these controls may include both automatic actions and managed actions. The administration facility 134 may configure policy rules that determine interactions. The administration facility 134 may also establish license management, which in turn may further determine interactions associated with licensed applications. In embodiments, interactions between the threat management facility 100 and the network 102 may provide threat protection to the network 102 by managing the flow of network data into and out of the network 102 through automatic actions that may be configured by the threat management facility 100 for example by action or configuration of the administration facility 134.

Client facilities 144 within the network 102 may be connected to the network 102 by way of wired network facilities 148A or wireless network facilities 148B. Mobile wireless facility clients 144, because of their ability to connect to a wireless network access point, may connect to the Internet 154 outside the physical boundary of the network 102, and therefore outside the threat-protected environment of the network 102. Such a client 144, if not for the presence of a locally installed endpoint computer security facility 152, may be exposed to a malware attack or perform actions counter to network 102 policies. Thus, the endpoint computer security facility 152 may provide local protection against various threats and policy violations. The threat management facility 100 may also or instead be configured to protect the out-of-enterprise facility 102 mobile client facility (e.g., the clients 144) through interactions over the Internet 154 (or other network) with the locally installed endpoint computer security facility 152. Thus, mobile client facilities that are components of the network 102 but temporarily outside connectivity with the network 102 may be provided with the threat protection and policy control the same as or similar to client facilities 144 inside the network 102. In addition, mobile client facilities 144 may receive the same interactions to and from the threat management facility 100 as client facilities 144 inside the enterprise facility 102, such as by receiving the same or equivalent services via an embedded endpoint computer security facility 152.

Interactions between the threat management facility 100 and the components of the network 102, including mobile client facility extensions of the network 102, may ultimately be connected through the Internet 154 or any other network or combination of networks. Security-related or policy-related downloads and upgrades to the network 102 may be passed from the threat management facility 100 through to components of the network 102 equipped with the endpoint computer security facility 152. In turn, the endpoint computer security facility 152 components of the enterprise facility or network 102 may upload policy and access requests back across the Internet 154 and through to the threat management facility 100. The Internet 154 however, is also the path through which threats may be transmitted from their source, and an endpoint computer security facility 152 may be configured to protect a device outside the network 102 through locally deployed protective measures and through suitable interactions with the threat management facility 100.

Thus, if the mobile client facility were to attempt to connect into an unprotected connection point, such as at a secondary location 108 that is not a part of the network 102, the mobile client facility 144 may be required to request network interactions through the threat management facility 100, where contacting the threat management facility 100 may be performed prior to any other network action. In embodiments, the client facility's 144 endpoint computer security facility 152 may manage actions in unprotected network environments such as when the client facility (e.g., client 144F) is in a secondary location 108, where the endpoint computer security facility 152 may dictate what applications, actions, resources, users, etc. are allowed, blocked, modified, or the like.

The secondary location 108 may have no endpoint computer security facilities 152 as a part of its components, such as its firewalls 138B, servers 142B, clients 144G, hubs and routers 148C-D, and the like. As a result, the components of the secondary location 108 may be open to threat attacks, and become potential sources of threats, as well as any mobile enterprise facility clients 144B-F that may be connected to the secondary location's 108 network. In this instance, these components may now unknowingly spread a threat to others connected to the network 102.

Some threats do not come directly from the internet 154. For example, a physical proximity threat 110 may be deployed on a client device while that device is connected to an unprotected network connection outside the enterprise facility 102, and when the device is subsequently connected to a client 144 on the network 102, the device can deploy the malware or otherwise pose a threat. In embodiments, the endpoint computer security facility 152 may protect the network 102 against these types of physical proximity threats 110, for instance, through scanning any device prior to allowing data transfers, through security validation certificates, through establishing a safe zone within the network 102 to receive data for evaluation, and the like.

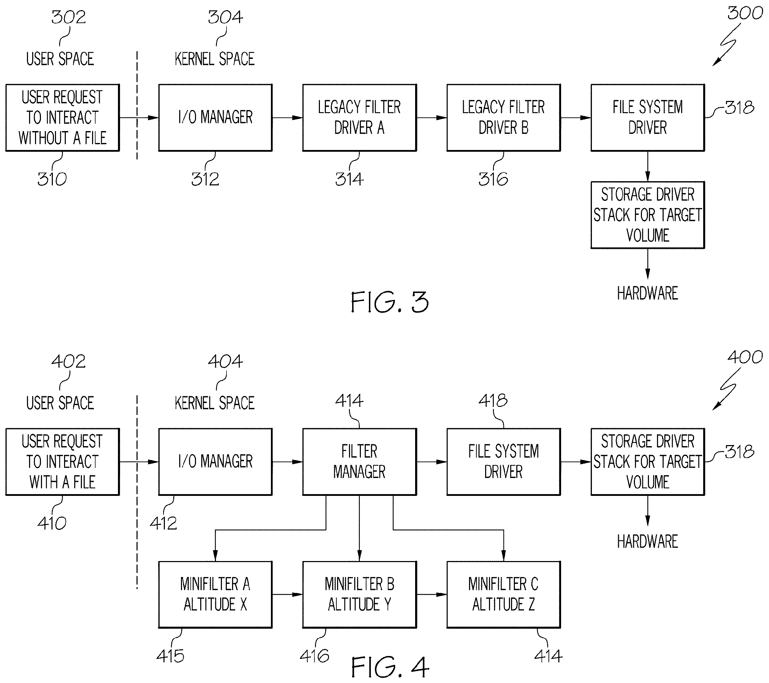

Having provided an overall context for threat detection, the description now turns to a brief discussion of embodiments of the present concept, followed by a description of systems and methods for preventing minifilter altitude and/or instance name squatting attacks. While the specific architectures provided herein below focus specifically on EDR systems, it should be understood that the embodiments of these EDR systems contemplated (e.g. the EDR system of FIG. 4) may include any or all of the various features of the environment for threat management of FIG. 1, including the various features of the threat management facility 100 and the monitored enterprise facility 102. Moreover, while the minifilter squatting protection systems and methods contemplated herein may be applied to EDR systems, minifilter squatting is a general purpose attack and the methods of appending a minifilter altitude with a random fractional and/or inserting a random combination of characters to an instance name may be useful in any type of cyber protection scenario not limited to the implementation of EDR systems.

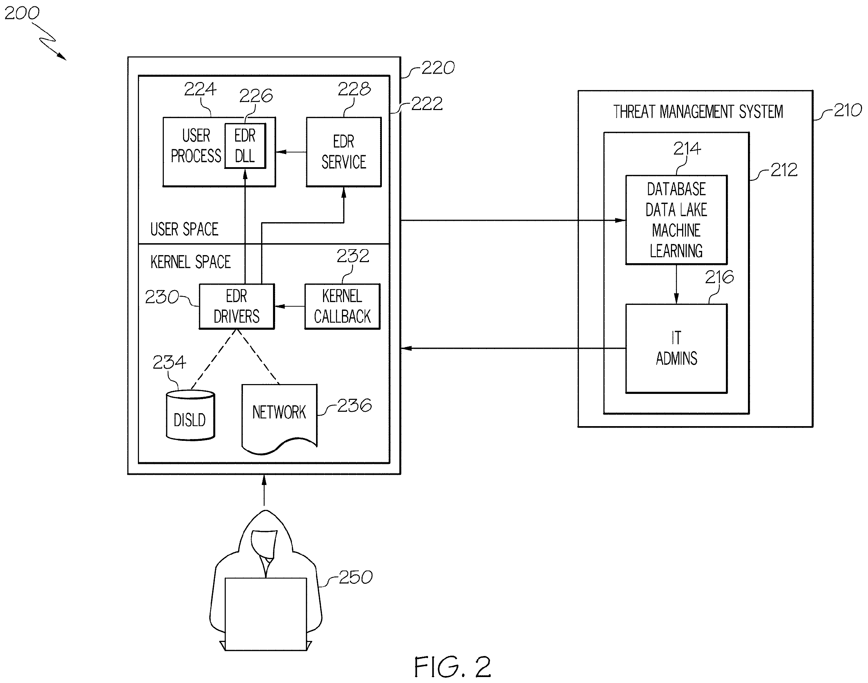

The presently described minifilter squatting protection contemplates methods performed on operating systems, such as Microsoft Windows ^{®}, which utilize a filter manager system for managing minifilters. To contrast such minifilter managed systems, FIG. 2 depicts an architectural schematic view of a legacy filter driver architecture which does not include a filter manager system. As shown, in a legacy filter system 200 the filter drivers sit on the filesystem stack directly inline of user-mode calls destined for the file system. Thus, at a step 210, a user request from the user mode and/or space 202 may be made to interact with a file. This request is then processed by an I/O manager in the kernel mode and/or space 204 at a step 212. As shown, a first legacy filter driver A is then processed at 214, followed by a second legacy filter driver B at 216. The architecture defines no order for how these drivers are placed in the filesystem stack, preventing a developer from knowing when the system will load one driver in relation to another. The filesystem driver 218 then processes the request and forwards the modified request to the storage driver stack 220. The legacy filter system 200 includes various problems such as confusing filter layering, lack of dynamic loading and unloading, complicated filesystem stack attachment and detachment of devices, indiscriminate interrupt request packets (IRPs), and the like.

Legacy filter systems 200 may incorporate some of the principles described herein, such as for example the driver name squatting prevention techniques using randomly generated numbers inserted into a driver name. Such methods may be applicable to legacy filter systems such as the system 200 to prevent name squatting of legacy drivers. However, many of the embodiments described herein apply to methods performed using newer systems having filter managers, such as those described in FIG. 3.

In particular, FIG. 3 depicts an architectural schematic view of a filter manager and minifilter architecture according to one embodiment. The filter manager may be configured to address some of the limitations of a legacy filter system and allow developers to write minifilters. The filter manager may be configured to intercept requests destined for the filesystem and pass such requests to the minifilters loaded on the system.

As shown, in a filter system 300, the filter drivers would sit on the filesystem stack, directly inline of user-mode calls destined for the file system. Thus, at a step 310, a user request from the user mode and/or space 302 may be made to interact with a file. This request is then processed by an I/O manager in the kernel mode and/or space 304 at a step 312. As shown, a filter manager 314 then processes these requests and coordinates with minifilters 315, 316, 317. Specifically, the filter manager 314 may be configured to intercept requests destined for the filesystem and pass these requests to the minifilters 315, 316, 317 loaded on the system, which exist in a minifilter sorted stack based on specific altitude levels. Unlike the legacy architecture shown in FIG. 2, the filter manager 314 may be configured to handle the task of passing information about requests to the minfilters 315, 316, 317. The minifilters 315, 316, 317 may be registered with the filter manager 314 for specific operations the minfilters 315, 316, 317 are interested in. Thus, the minifilters 315, 316, 317 do not need to handle all I/O requests.

When a supported operation occurs, the filter manager 314 may be configured to first call the correlated pre-operation callback function in each of the loaded minifilters 315, 316, 317. Once a minifilter 315, 316, 317 completes its pre-operation routine, it passes control back to the filter manager 314, which calls the next callback function in the subsequent driver. When all drivers have completed their pre-operation callbacks, the request travels to the filesystem driver 318, which processes the operation and then forwards the modified request to the storage driver stack 320.

After receiving the I/O request for completion, the filter manager 314 may be configured to invoke the post-operation callback functions in the minifilters 315, 316, 317 in reverse order. Once the post-operation callbacks complete, control is transferred back to the I/O manager 312, which eventually passes control back to the caller application.

Each minifilter 315, 316, 317 may include an altitude, which is a number that identifies its location in the minifilter stack and determines when the system will load that minifilter 315, 316, 317. Ideally, an operating system such as Microsoft Windows ^{®} may assign altitudes to the minifilters 315, 316, 317 of production applications. These altitude values may be specified in the drivers' registry keys, under Altitude. The operating system may further be configured to sort altitudes into load-order groups.

FIG. 4 depicts an architectural schematic view of an endpoint detection and response (EDR) system 400 including a central threat management system 410 configured to monitor a plurality of endpoints, such as an endpoint device 420, for threats 450. The central threat management system 410 includes a central EDR system 412 including automated systems 414 such as databases and/or datalake(s) configured to receive information and data from the endpoint devices 420 related to endpoint device usage and behaviors, as well as machine learning tools configured to derive insights associated with the received data. The central EDR system 412 may further include manual systems 416 comprising IT administrators and/or analysts and the like configured to manually review information and data received from endpoint devices 420.

The endpoint device 420 is shown including a local EDR system 422 operating and/or otherwise installed thereon, having various components operating in both a user space and kernel space of the endpoint device 420. For example, the user space may include user processes 424. An EDR service application 428 is provided on the endpoint device 420 in communication with associated EDR dynamic link libraries 426 which monitor the user processes 424. At the Kernel space level, the local EDR system 422 includes EDR drivers 430 operably connected to a local disk 434 and local network 436. The EDR drivers 430 may include one or more filesystem minifilter drivers, as described herein below. The EDR drivers 430 may be configured to interact with Kernel callback routines 432, as further described in more detail herein below. The EDR driver 430 may be configured to detect at least one of a creation of a new file, a modification of an existing file, and a usage of a named pipe and provide information associated with such detection to the threat management system 410 and the central EDR system 412 thereof.

The EDR system 400 may be configured to investigate suspicious activity at endpoints via a centralized monitoring threat management system and localized endpoint agents which provide endpoint data for analysis. Thus, the EDR system 400 may enable the blocking of threats through early detections with both manual and/or automated (e.g., AI driven) analysis. The centralized monitoring threat management system may be configured to remotely access endpoint devices to further investigate, install or uninstall software, or remediate issues detected.

As described above, the EDR system 400 may include the filesystem minifilter drivers (minifilters) 430 which may interact with a minifilter manager system, such as the filter manager 314 described above. These minfilters 430 may provide for important functionality within the EDR system 400. Thus, it is important that these minifilters remain operational and not evaded through malicious actors. The concepts described herein provide for methods and systems to prevent squatting attacks on such minifilters 430 in order to maintain full functionality of the EDR system 400.

Thus, the endpoint device 420 may be monitored by the centralized threat management computer system 410. The an endpoint device 420 includes a localized EDR system 422 in communication with the centralized EDR system 412. In order to accomplish the prevention of squatting attacks, the endpoint device 420 includes at least one filesystem minifilter driver 430 that includes an appended randomly generated fractional to an assigned (by the operating system, for example) integer altitude. Additionally or alternatively, the at least one filesystem minifilter driver 430 may further include an inserted combination of randomly generated characters to a filesystem minifilter driver instance name.

The randomly generated fractional may be generated by an operating system function 433 at a time of loading of the minifilter driver 430. The operating system function 433 may be any function which is configured to load before the minifilter driver 430 and create a random combination of numbers and/or characters. In the event of appending an assigned integer altitude, the random combination may be a combination of numbers applied as a fractional to the whole integer altitude.

In the event of inserting a random combination of characters into the minifilter instance name, the random combination may be a combination of any characters allowed in a minifilter instance name by the operating system. Further, the location of the characters may be inserted at any point in the instance name. For example, "inserting" or "inserted" may mean putting the random combination of characters at a beginning of an instance name, at an end of the instance name, or anywhere in between the beginning or end of the instance name. This is in contrast to "appending" the fractional value after the assigned altitude name, whereby the appended fractional must be located after the altitude in the form of a multi digit decimal number or fractional value.

In some embodiments, the randomly generated fractional appended to the altitude, and the combination of randomly generated characters inserted into the instance name, may actually consist or comprise of the same sequence of numbers generated by an operating system function 433. This may have an advantage of only having to generate a single random combination at a load time.

In various embodiments, any amount of numbers and/or characters is contemplated for the appending to the altitude and/or for insertion into an instance name. For example, in the event of an altitude of 321000, which may be appended by a random numeric 10 digit fractional, making the altitude 321000.6612349098, for example. In the event the same combination is used for the instance name, the minifilter instance name may be appended to be *MinifilterInstanceName6612349098.* While the above exemplary embodiment includes 10 digits, any number of digits or characters may be contemplated for random generation and appending to the altitude and/or inserting into the instance name. In the event of insertion into instance names, any number of characters may be included. Thus, in embodiments which incorporate both instance name and altitude squatting prevention, a different random combination may be created for the instance name and the altitude.

In addition to the time of loading, the insertion and/or appending of the random combinations as contemplated herein may also be applied when a new volume is attached to the system, e.g. a USB is plugged in, or an ISO is mounted. These actions may create a new volume on the system, and a drive letter is typically associated with the volume. As part of this work, the Filter Manager may be configured to give the file system filters the ability to attach to the new volume. Thus, it is also contemplated to generate a new fractional for appending and/or a new combination of random characters for insertion per new volume attach.

The threat management computer system 410 and the central EDR system 412 thereof may further include a database or system 418 configured to maintain current assigned integer altitudes and/or the current assigned instance names with the inserted randomly generated fractionals and/or characters from a plurality of endpoint devices, such as the endpoint device 420, managed by the centralized EDR system 412.

While not shown, many endpoints may be monitored by the threat management computer system 410 each incorporating the architecture of the exemplary endpoint 420. For example, a second endpoint device monitored by the centralized threat management computer system 410 is contemplated including a second localized EDR system in communication with the centralized EDR system 412. The second endpoint device may include its own installed operating system filter manager and second localized EDR system. The second endpoint device may include its own endpoint filesystem minifilter driver managed by the second filter manager. This second endpoint filesystem minifilter driver may generate its own random combination of numbers and/or characters at the time of loading. Thus, the second endpoint filesystem minifilter driver may include a completely different appended randomly generated fractional to the assigned integer altitude and/or inserted into the instance name than the same filesystem minifilter driver found on a different device within the EDR system 400.

Likewise, every time an endpoint is rebooted, the operating system function 433 may be configured to create a new random combination of numbers to apply as a fractional to the altitude and/or may create a new random combination of characters to apply or insert into an instance name for the minifilter.

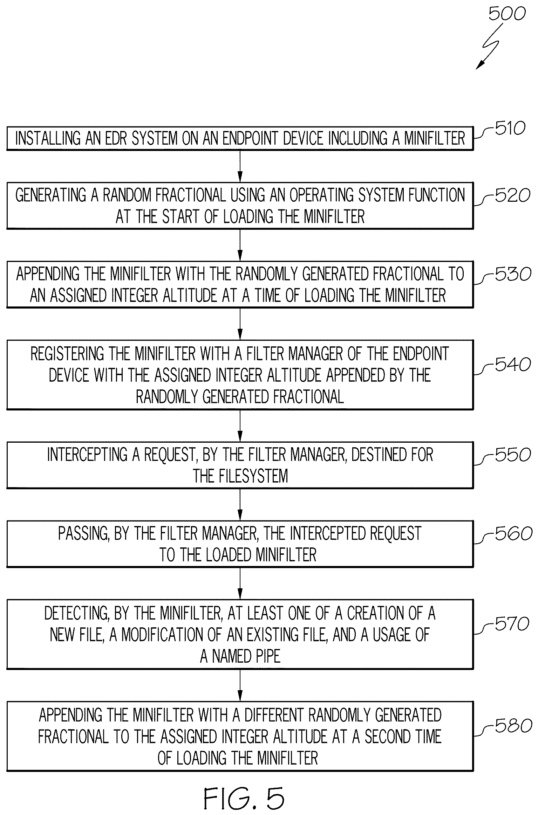

FIG. 5 depicts a flow chart for a method 500 for protecting against filesystem minifilter driver altitude squatting attacks according to one embodiment. As shown, the method 500 includes a first step 510 of installing an EDR system, such as the localized EDR system 422, on an endpoint device, such as the endpoint device 420, including a minifilter, such as the EDR minifilter driver(s) 430.

The method 500 includes a step 520 of generating a random fractional using an operating system function, such as the operating system function 433, at the start of loading of the minifilter. The method then includes a step 530 of appending the at least one filesystem minifilter driver with the randomly generated fractional to an assigned integer altitude at a time of loading the at least one filesystem minifilter driver.

The method 500 then includes a step 540 of registering the at least one filesystem minifilter driver with a filter manager of the endpoint device with the assigned integer altitude appended by the randomly generated fractional.

The method 500 may include a step 550 of intercepting requests, by the filter manager, destined for the filesystem and a step 560 of passing intercepted requests, by the filter manager, to loaded filesystem minifilter drivers including the at least one filesystem minifilter driver. The method 500 may then include a step 570 of detecting, by the at least one minifilter driver, at least one of a creation of a new file, a modification of an existing file, and a usage of a named pipe.

The method 500 may further include rebooting the endpoint device and/or reloading the minifilter driver. In such cases, the method 500 may include a step 580 of appending the at least one filesystem minifilter driver with a different randomly generated fractional to the assigned integer altitude at a second time of loading the at least one filesystem minifilter driver.

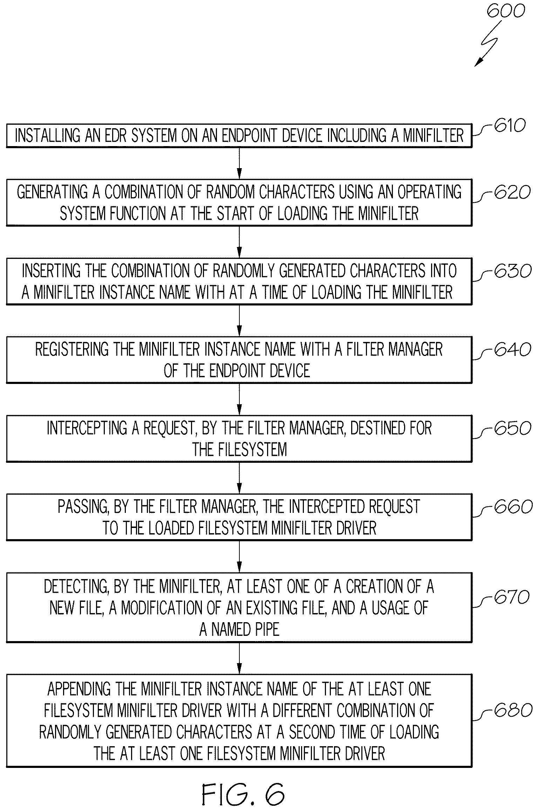

FIG. 6 depicts a flow chart for a method 600 for protecting against filesystem minifilter driver name squatting attacks according to one embodiment. As shown, the method 600 includes a first step 610 of installing an EDR system, such as the localized EDR system 422, on an endpoint device, such as the endpoint device 420, including a minifilter, such as the EDR minifilter driver(s) 430.

The method 600 includes a step 620 of generating a random combination of characters using an operating system function, such as the operating system function 433, at the start of loading of the minifilter. The method then includes a step 630 of inserting a combination of randomly generated characters into the filesystem minifilter driver instance name at a time of loading the at least one filesystem minifilter driver.

The method 600 then includes a step 640 of registering the at least one filesystem minifilter driver with a filter manager of the endpoint device with the minifilter instance name having the random combination of characters.

The method 600 may include a step 650 of intercepting requests, by the filter manager, destined for the filesystem and a step 660 of passing intercepted requests, by the filter manager, to loaded filesystem minifilter drivers including the at least one filesystem minifilter driver. The method 600 may then include a step 670 of detecting, by the at least one minifilter driver, at least one of a creation of a new file, a modification of an existing file, and a usage of a named pipe.

The method 600 may further include rebooting the endpoint device and/or reloading the minifilter driver. In such cases, the method 600 may include a step 680 of inserting a different combination of randomly generated characters into the at least one filesystem minifilter driver at a second time of loading the at least one filesystem minifilter driver.

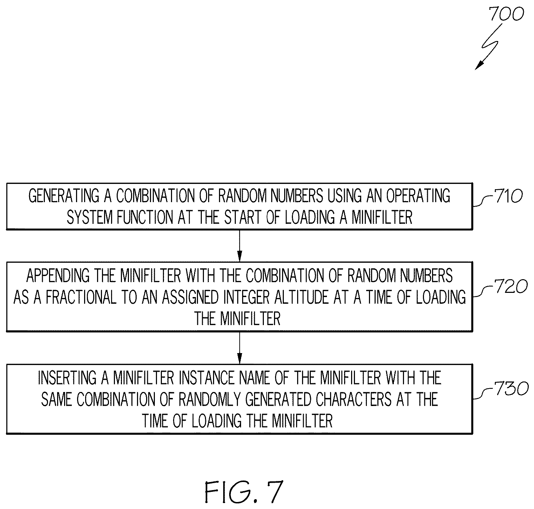

FIG. 7 depicts a flow chart for a method 700 for protecting against filesystem minifilter driver name and altitude squatting attacks according to one embodiment. The method 700 may include any or all of the steps described hereinabove in the methods 500, 600. Further, the method 700 may include a step 710 of generating a single combination of random numbers using an operating system function at the start of the loading of a minifilter. The method 700 may include a step 720 of appending the minifilter with the combination of random numbers as a fractional to an assigned integer altitude at a time of loading the at least one filesystem minifilter driver. The method 700 may include another step 730 of inserting the same combination of randomly generated numbers into the minifilter instance name at the time of loading the at least one filesystem minifilter driver. In other embodiments, the method 700 may include both step 720 and another step 730 of inserting the minifilter instance name with a different combination of randomly generated characters.

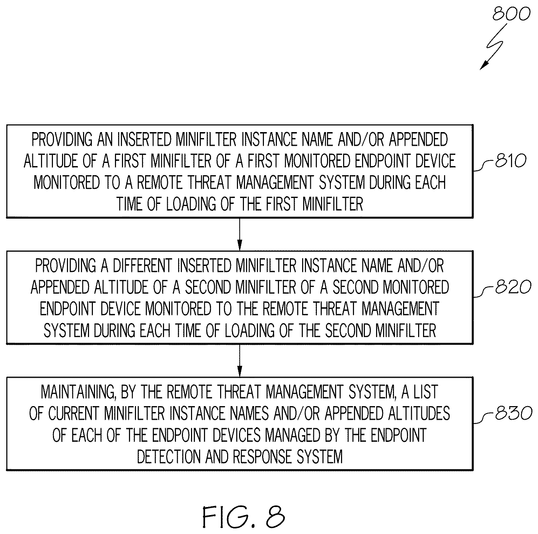

FIG. 8 depicts a flow chart for a method 800 for protecting against filesystem minifilter driver squatting attacks with multiple monitored endpoint devices according to one embodiment. The method 800 includes a step 810 of providing an inserted minifilter instance name and/or appended altitude of a first minifilter of a first monitored endpoint device monitored by a remote threat management system during each time of loading the minifilter. The method 800 further includes a step 820 of providing a different inserted minifilter instance name and/or appended altitude of a second minifilter of a second monitored endpoint device monitored by the remote threat management system during each time of loading the second minifilter. The method 800 may further include a step 830 of maintaining, by the remote threat management system, a list of current minifilter instance names and/or appended altitudes of each of the endpoint devices managed by the EDR system of the remote threat management system.

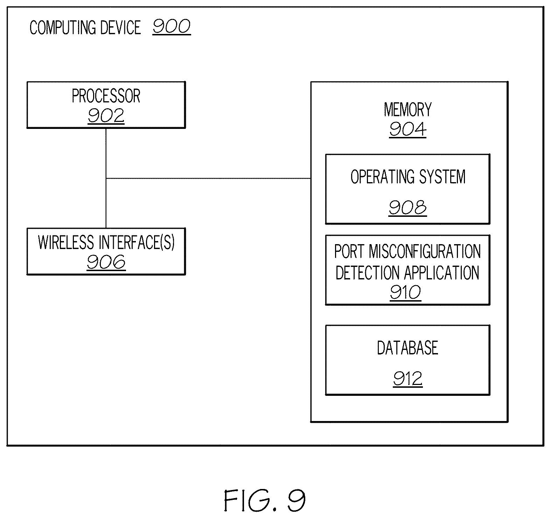

FIG. 9 is a diagram of an example computing device 900, according to an example embodiment. As shown, the computing device 900 includes one or more processors 902, transitory or non-transitory computer readable medium or memory 904, and I/O interface devices 906 (e.g., wireless communications, etc.). The computer readable medium 904 may include an operating system 908, running one or more software applications 910 in accordance with the systems and methods described herein.

In operation, the processor 902 may execute the application 910 stored in the computer readable medium 904. The application 910 may include software instructions that, when executed by the processor, cause the processor to perform operations for responding to a threat, as described and shown in the various Figures.

The application program 910 may operate in conjunction with the data section 912 and the operating system 908. The device 900 may communicate with other devices (e.g., a wireless access point) via the I/O interfaces 906.

Although the foregoing figures illustrate various embodiments of the disclosed systems and methods, additional and/or alternative embodiments are contemplated as falling within the scope of this disclosure. For example, in one embodiment, this disclosure provides for a method for protecting against filesystem minifilter driver squatting attacks that includes installing at least one filesystem minifilter driver on an endpoint device; and appending the at least one filesystem minifilter driver with a randomly generated fractional to an assigned integer altitude at a time of loading the at least one filesystem minifilter driver.

In another embodiment, the method includes detecting, by the at least one minifilter driver, at least one of a creation of a new file, a modification of an existing file, and a usage of a named pipe.

In a further embodiment, the method includes registering the at least one filesystem minifilter driver with a filter manager of the endpoint device with the assigned integer altitude appended by the randomly generated fractional, wherein the filter manager is configured to intercept requests destined for the filesystem and pass intercepted requests to loaded filesystem minifilter drivers including the at least one filesystem minifilter driver.

In yet another embodiment, the method includes generating the randomly generated fractional using an operating system function at the start of loading the at least one filesystem minifilter driver.

In yet a further embodiment, the method includes inserting a combination of randomly generated characters into a filesystem minifilter driver instance name of the at least one filesystem minifilter driver at a time of loading.

In another embodiment, the randomly generated fractional and the combination of randomly generated characters include the same sequence of numbers generated by an operating system function.

In a further embodiment, the method includes appending the at least one filesystem minifilter driver with a different randomly generated fractional to the assigned integer altitude at a second time of loading the at least one filesystem minifilter driver.

In yet another embodiment, the method includes providing the assigned integer altitude appended by the randomly generated fractional to a remote threat management system managing an endpoint detection and response system of the endpoint device.

In yet a further embodiment, the method includes maintaining, by the remote threat management system, a list of current assigned integer altitudes appended by randomly generated fractionals from a plurality of endpoint devices managed by the endpoint detection and response system.

In another embodiment, a computer system includes a threat management computer system including a centralized endpoint detection and response (EDR) system configured to monitor a plurality of endpoints for threats; and an endpoint device monitored by the centralized threat management computer system, the an endpoint device including a localized EDR system in communication with the centralized EDR system, the an endpoint device including a filter manager, wherein the localized EDR system includes at least one filesystem minifilter driver managed by the filter manager, the at least one filesystem minifilter driver including an appended randomly generated fractional to an assigned integer altitude.

In another embodiment, the appended randomly generated fractional assigned to the assigned integer altitude is randomly generated and appended at the time of loading of the at least one filesystem minifilter driver.

In a further embodiment, the at least one minifilter driver is configured to detect at least one of a creation of a new file, a modification of an existing file, and a usage of a named pipe.

In yet another embodiment, the at least one filesystem minifilter driver includes an inserted combination of randomly generated characters into a filesystem minifilter driver instance name.

In yet a further embodiment, the randomly generated fractional and the combination of randomly generated characters include the same sequence of numbers generated by an operating system function.

In another embodiment, the computer system includes a second endpoint device monitored by the centralized threat management computer system, the second endpoint device including a second localized EDR system in communication with the centralized EDR system, the second endpoint device including a second filter manager. The second localized EDR system includes at least one second endpoint filesystem minifilter driver managed by the second filter manager, and the at least one second endpoint filesystem minifilter driver includes a different appended randomly generated fractional to the assigned integer altitude. The different appended randomly generated fractional is a different set of numbers than the appended randomly generated fractional of the endpoint device.

In another embodiment, the threat management computer system includes a system configured to maintain current assigned integer altitudes appended by randomly generated fractionals from a plurality of endpoint devices managed by the centralized EDR system including the endpoint device and the second endpoint device.

In another embodiment, a method for protecting against filesystem minifilter driver squatting attacks includes installing an endpoint detection and response system on an endpoint device, wherein the endpoint detection and response system includes at least one filesystem minifilter driver; generating a random fractional using an operating system function at the start of loading the at least one filesystem minifilter driver; appending the at least one filesystem minifilter driver with the randomly generated fractional to an assigned integer altitude at a time of loading the at least one filesystem minifilter driver; registering the at least one filesystem minifilter driver with a filter manager of the endpoint device with the assigned integer altitude appended by the randomly generated fractional; intercepting a request, by the filter manager, destined for the filesystem; passing, by the filter manager, the intercepted request to the loaded filesystem minifilter driver; and detecting, by the at least one minifilter driver, at least one of a creation of a new file, a modification of an existing file, and a usage of a named pipe.

In another embodiment, the method includes inserting a combination of randomly generated characters into a filesystem minifilter driver instance name of the at least one filesystem minifilter driver at a time of loading.

In a further embodiment, the randomly generated fractional and the combination of randomly generated characters include the same sequence of numbers generated by an operating system function.

In yet another embodiment, the method includes appending the at least one filesystem minifilter driver with a different randomly generated fractional to the assigned integer altitude at a second time of loading the at least one filesystem minifilter driver.

Accordingly, the foregoing systems and methods present a technologically beneficial approach to addressing the problem of minifilter evasion in EDR systems.

It will be appreciated that the modules, processes, systems, and sections described above may be implemented in hardware, hardware programmed by software, software instructions stored on a transitory, or nontransitory, computer readable medium or a combination of the above. A system as described above, for example, may include a processor configured to execute a sequence of programmed instructions stored on a transitory, or nontransitory, computer readable medium. For example, the processor may include, but not be limited to, a personal computer or workstation or other such computing system that includes a processor, microprocessor, microcontroller device, or is comprised of control logic including integrated circuits such as, for example, an Application Specific Integrated Circuit (ASIC). The instructions may be compiled from source code instructions provided in accordance with a programming language such as Java, C, C++, C#.net, assembly or the like. The instructions may also comprise code and data objects provided in accordance with, for example, the Visual Basic^{™} language, or another structured or object-oriented programming language. The sequence of programmed instructions, or programmable logic device configuration software, and data associated therewith may be stored in a transitory, or nontransitory, computer-readable medium such as a computer memory or storage device which may be any suitable memory apparatus, such as, but not limited to ROM, PROM, EEPROM, RAM, flash memory, disk drive and the like.

Furthermore, the modules, processes systems, and sections may be implemented as a single processor or as a distributed processor. Further, it should be appreciated that the steps mentioned above may be performed on a single or distributed processor (single and/or multicore, or cloud computing system). Also, the processes, system components, modules, and sub-modules described in the various figures of and for embodiments above may be distributed across multiple computers or systems or may be co-located in a single processor or system. Example structural embodiment alternatives suitable for implementing the modules, sections, systems, means, or processes described herein are provided below.

The modules, processors or systems described above may be implemented as a programmed general purpose computer, an electronic device programmed with microcode, a hard-wired analog logic circuit, software stored on a computer-readable medium or signal, an optical computing device, a networked system of electronic and/or optical devices, a special purpose computing device, an integrated circuit device, a semiconductor chip, and/or a software module or object stored on a computer-readable medium or signal, for example.

Embodiments of the method and system (or their sub-components or modules), may be implemented on a general-purpose computer, a special-purpose computer, a programmed microprocessor or microcontroller and peripheral integrated circuit element, an ASIC or other integrated circuit, a digital signal processor, a hardwired electronic or logic circuit such as a discrete element circuit, a programmed logic circuit such as a PLD, PLA, FPGA, PAL, or the like. In general, any processor capable of implementing the functions or steps described herein may be used to implement embodiments of the method, system, or a computer program product (software program stored on a computer readable medium).

Furthermore, embodiments of the disclosed method, system, and computer program product (or software instructions stored on a computer readable medium) may be readily implemented, fully or partially, in software using, for example, object or object-oriented software development environments that provide portable source code that may be used on a variety of computer platforms. Alternatively, embodiments of the disclosed method, system, and computer program product may be implemented partially or fully in hardware using, for example, standard logic circuits or a VLSI design. Other hardware or software may be used to implement embodiments depending on the speed and/or efficiency requirements of the systems, the particular function, and/or particular software or hardware system, microprocessor, or microcomputer being utilized. Embodiments of the method, system, and computer program product may be implemented in hardware and/or software using any known or later developed systems or structures, devices and/or software by those of ordinary skill in the applicable art from the function description provided herein and with a general basic knowledge of the software engineering and computer networking arts.

Moreover, embodiments of the disclosed method, system, and computer readable media (or computer program product) may be implemented in software executed on a programmed general purpose computer, a special purpose computer, a microprocessor, a network server or switch, or the like.

While the disclosed subject matter has been described in conjunction with a number of embodiments, it is evident that many alternatives, modifications and variations would be, or are, apparent to those of ordinary skill in the applicable arts. Accordingly, Applicants intend to embrace all such alternatives, modifications, equivalents and variations that are within the spirit and scope of the disclosed subject matter. It should also be understood that references to items in the singular should be understood to include items in the plural, and vice versa, unless explicitly stated otherwise or clear from the context. Grammatical conjunctions are intended to express any and all disjunctive and conjunctive combinations of conjoined clauses, sentences, words, and the like, unless otherwise stated or clear from the context. Thus, the term "or" should generally be understood to mean "and/or" and so forth.

## Claims

1. A method for protecting against filesystem minifilter driver squatting attacks comprising:
installing at least one filesystem minifilter driver on an endpoint device; and
at a time of loading the at least one filesystem minifilter driver, performing at least one of:
(a) appending the at least one filesystem minifilter driver with a randomly generated fractional to an assigned integer altitude; and
(b) inserting a combination of randomly generated characters into a minifilter instance name of the at least one filesystem minifilter driver.

2. The method of claim 1, wherein the endpoint detection and response system includes the at least one filesystem minifilter driver, and wherein performing at least one of (a) and (b) comprises inserting the combination of randomly generated characters into the minifilter instance name of the at least one filesystem minifilter driver at the time of loading the at least one filesystem minifilter driver.

3. The method of claim 2, further comprising:
detecting, by the at least one minifilter driver, at least one of a creation of a new file, a modification of an existing file, and a usage of a named pipe.

4. The method of claim 2 or 3, further comprising:
registering the at least one filesystem minifilter driver with a filter manager of the endpoint device with minifilter instance name with the combination of randomly generated characters, wherein the filter manager is configured to intercept requests destined for the filesystem and pass intercepted requests to loaded filesystem minifilter drivers including the at least one filesystem minifilter driver.

5. The method of any of claims 2 to 4, further comprising:
generating the combination of randomly generated characters using an operating system function at the start of loading the at least one filesystem minifilter driver.

6. The method of any of claims 2 to 5, further comprising:
appending the at least one filesystem minifilter driver with a randomly generated fractional to an assigned integer altitude at a time of loading the at least one filesystem minifilter driver, wherein the randomly generated fractional and the combination of randomly generated characters include the same sequence of numbers generated by an operating system function.

7. The method of any of claims 2 to 6, further comprising:
inserting a different combination of randomly generated characters into the minifilter instance name of the at least one filesystem minifilter driver at a second time of loading the at least one filesystem minifilter driver.

8. The method of any of claims 2 to 7, further comprising:
providing the minifilter instance name of the at least one minifilter with the combination of randomly generated characters to a remote threat management system managing the endpoint detection and response system of the endpoint device; and
maintaining, by the remote threat management system, a list of current minifilter instance names with the combination of randomly generated characters from a plurality of endpoint devices managed by the endpoint detection and response system.

9. The method of any preceding claim, wherein performing at least one of (a) and (b) comprises appending the at least one filesystem minifilter driver with the randomly generated fractional to the assigned integer altitude at the time of loading the at least one filesystem minifilter driver.

10. The method of claim 9, further comprising:
detecting, by the at least one minifilter driver, at least one of a creation of a new file, a modification of an existing file, and a usage of a named pipe.

11. The method of claim 9 or 10, further comprising:
registering the at least one filesystem minifilter driver with a filter manager of the endpoint device with the assigned integer altitude appended by the randomly generated fractional, wherein the filter manager is configured to intercept requests destined for the filesystem and pass intercepted requests to loaded filesystem minifilter drivers including the at least one filesystem minifilter driver.

12. The method of any of claims 9 to 11, further comprising:
generating the randomly generated fractional using an operating system function at the start of loading the at least one filesystem minifilter driver.

13. The method of any of claims 9 to 12, further comprising:
inserting a combination of randomly generated characters into a filesystem minifilter driver instance name of the at least one filesystem minifilter driver at a time of loading, wherein the randomly generated fractional and the combination of randomly generated characters include the same sequence of numbers generated by an operating system function.

14. The method of any of claims 9 to 13, further comprising:
appending the at least one filesystem minifilter driver with a different randomly generated fractional to the assigned integer altitude at a second time of loading the at least one filesystem minifilter driver.

15. The method of any of claims 9 to 14, further comprising:
providing the assigned integer altitude appended by the randomly generated fractional to a remote threat management system managing an endpoint detection and response system of the endpoint device; and
maintaining, by the remote threat management system, a list of current assigned integer altitudes appended by randomly generated fractionals from a plurality of endpoint devices managed by the endpoint detection and response system.
